# FASCICULE DE BREVET EUROPEEN

(11) **EP 4 256 187 B1**
(45) Date de publication et mention de la délivrance du brevet: **18.09.2024**
(21) Numéro de dépôt: 21823984.6
(22) Date de dépôt: 24.11.2021
(51) Int. Cl.: F02C 7/042, B64D 33/02, F02K 1/64, F02C 7/18

(54) **ECOPE POUR UNE TURBOMACHINE D'AERONEF**
SCHAUFEL FÜR EIN FLUGZEUGTURBINENTRIEBWERK
SCOOP FOR AN AIRCRAFT TURBINE ENGINE

(30) Priorité: 03.12.2020 FR 2012588
(43) Date de publication de la demande: 11.10.2023
(73) Titulaire: SAFRAN AIRCRAFT ENGINES, 75015 Paris (FR)
(72) Inventeur: MAURER, Paco, 77550 MOISSY-CRAMAYEL (FR); BECOULET, Julien Fabien Patrick, 77550 MOISSY-CRAMAYEL (FR); MORREALE, Serge René, 77550 MOISSY-CRAMAYEL (FR); STOLIAROFF-PEPIN, Nicolas, 77550 MOISSY-CRAMAYEL (FR)
(74) Mandataire: Gevers & Orès
(86) Numéro de dépôt international: PCT/FR2021/052087
(87) Numéro de publication internationale: WO 2022/117934

(56) Documents cités:
- WO-A2-2005/016748
- FR-A1- 3 028 289
- US-A- 3 109 610
- US-A1- 2009 152 406

## Description

### Domaine technique de l'invention

La présente invention concerne une écope pour une turbomachine d'aéronef, ainsi qu'une turbomachine comportant une telle écope.

### Arrière-plan technique

L'arrière-plan technique comprend notamment les documents US-A1-2009/152406, WO-A2-2005/016748, US-A-3,109,610 et FR-A1-3 028 289. Une turbomachine d'aéronef peut être équipée d'une ou plusieurs écopes pour le prélèvement d'air s'écoulant autour ou dans la turbomachine, en vue de l'alimentation d'un équipement de la turbomachine.

Une écope est ainsi un dispositif qui permet de capter une partie d'un flux d'air en écoulement. En général, une écope fait saillie sur une surface ou une paroi balayée par un flux d'air et cette écope capte une partie de ce flux d'air pour l'acheminer jusqu'à l'équipement à alimenter. Cet équipement est par exemple un échangeur de chaleur, l'air prélevé servant ainsi à alimenter un circuit d'air froid de l'échangeur.

Lorsque la turbomachine est un turboréacteur à double flux, la turbomachine comprend une veine primaire d'écoulement d'un flux d'air primaire à l'intérieur d'un générateur de gaz, et une veine d'écoulement d'un flux secondaire autour du générateur de gaz et à l'intérieur d'une nacelle qui s'étend autour du générateur de gaz et d'une soufflante située en amont du générateur de gaz.

Une écope peut être située sur une paroi annulaire externe d'une nacelle de la turbomachine, en vue de capter une partie du flux d'air s'écoulant autour de la nacelle en fonctionnement. Une écope peut également être située sur une paroi annulaire entourant le générateur de gaz, en vue de capter une partie du flux d'air secondaire.

Dans la technique actuelle, il existe deux technologies d'écope. Selon une première technologie, l'écope comprend un corps de captation qui est fixe. L'avantage de ce type d'écope est qu'elle est simple à concevoir et à entretenir. Un inconvénient de cette écope est qu'elle crée un obstacle dans l'écoulement d'air et entraîne des perturbations et des pertes de charge dans cet écoulement même lorsqu'un prélèvement d'air par l'écope n'est pas nécessaire.

Selon une autre technologie, l'écope comprend un corps de captation qui est mobile depuis une position fermée ou rabattue dans laquelle le corps ne forme pas un obstacle à l'écoulement d'air, et une position ouverte ou déployée dans laquelle le corps s'étend dans le flux d'air pour en capter une partie. Le déplacement du corps est alors assuré par un actionneur et contrôlé de manière active par un organe de commande dédié.

L'avantage de cette écope est lié au fait qu'elle ne crée pas d'obstacle et génère donc peu de pertes de charge dans l'écoulement d'air lorsqu'elle n'est pas utilisée, mais son inconvénient est qu'elle est complexe à réaliser et donc coûteuse, et demande en outre des opérations de maintenance régulière.

La présente invention propose une solution à au moins une partie des inconvénients de ces technologies antérieures.

### Résumé de l'invention

La présente invention concerne une écope pour une turbomachine d'aéronef, cette écope comportant un corps qui est mobile entre au moins deux positions dont une première position dans laquelle il est configuré pour capter une partie d'un premier flux d'air s'écoulant dans une première direction, et une deuxième position dans laquelle il est configuré pour capter une partie d'un second flux d'air s'écoulant dans une deuxième direction qui est opposée à la première direction, où ledit corps est monté libre en déplacement entre lesdites au moins deux positions de façon à adopter automatiquement la première position lors de l'écoulement du premier flux d'air, et à adopter automatiquement la deuxième position lors de la l'écoulement du deuxième flux d'air.

L'écope selon l'invention a un fonctionnement autonome ou passif, c'est-à-dire qu'elle se déplace et adopte une position sans intervention particulière, c'est-à-dire sans actionnement mécanique ou contrôle particulier.

L'écope selon l'invention peut en outre être assimilée à une double écope dans la mesure où elle est configurée pour capter de l'air provenant de deux directions opposées et donc différentes.

Dans le cas particulier précité où l'écope serait montée sur une paroi entourant un générateur de gaz et définissant intérieurement une veine secondaire, on comprend qu'une partie d'un flux d'air s'écoulant dans la première direction, depuis la soufflante jusqu'à une tuyère d'échappement des gaz de la turbomachine (qui correspond au fonctionnement normal de la turbomachine), serait captée par l'écope dans sa première position, et qu'une partie d'un flux d'air s'écoulant dans la seconde direction, depuis la tuyère jusqu'à la soufflante (qui correspond à un fonctionnement d'inversion de poussée de la turbomachine), serait captée par l'écope dans sa seconde position.

Le déplacement du corps de l'écope entre ses positions est automatique et dépend de la direction d'écoulement du flux d'air au niveau de ce corps, et plus particulièrement de l'effet de captation du flux d'air qui a tendance à déplacer l'écope dans l'une de ses positions. Autrement dit, c'est une différence de pression dynamique d'un côté et de l'autre de l'écope (entre l'amont et l'aval de l'écope en fonctionnement normal de la turbomachine) qui provoque ce déplacement. Lorsqu'un flux d'air s'écoule dans la première direction, l'effet de pression dynamique en amont de l'écope provoque le déplacement de l'écope dans sa première position de manière automatique. Lorsqu'un flux d'air s'écoule dans la deuxième direction, l'effet de pression dynamique en amont de l'écope (en fonctionnement normal de la turbomachine) provoque le déplacement de l'écope dans sa deuxième position de manière automatique.

L'écope selon l'invention peut comprendre une ou plusieurs des caractéristiques suivantes, prises isolément les unes des autres, ou en combinaison les unes avec les autres :
- ledit corps est mobile en pivotement ou en coulissement entre lesdites positions ;
- ledit corps est mobile en pivotement autour d'un axe sensiblement perpendiculaire auxdites première et deuxième directions ;
- ledit corps est configuré pour adopter une position intermédiaire de repos, situé entre les première et deuxième positions, en l'absence d'écoulement du premier flux d'air et du deuxième flux d'air ; lorsqu'aucun flux d'air s'écoule au niveau de l'écope, il n'y a pas d'effet de captation ni de pression dynamique et le corps de l'écope adopte automatiquement cette position intermédiaire ;
- l'écope comprend un orifice de passage d'air capté par le corps, ledit corps étant configuré pour fermer cet orifice lorsqu'il est dans la position intermédiaire et pour l'ouvrir lorsqu'il est dans chacune des première et deuxième positions ;
- ledit corps comprend une première bouche ou surface aérodynamique de captation orientée vers la deuxième direction, et une seconde bouche ou surface aérodynamique de captation orientée vers la première direction ;
- les première et seconde surfaces aérodynamiques sont planes ou incurvées concaves ;
- ledit corps a une forme générale de dièdre ou en section transversale une forme générale en V ;

-- l'écope comprend un dispositif à aimant ou ressort, configuré pour maintenir le corps dans au moins l'une de ses positions.

La présente invention concerne également une turbomachine, en particulier d'aéronef, comportant au moins une écope telle que décrite ci-dessus.

La turbomachine selon l'invention peut comprendre une ou plusieurs des caractéristiques suivantes, prises isolément les unes des autres, ou en combinaison les unes avec les autres :
- la turbomachine est du type à double flux et comprend une veine primaire d'écoulement d'un flux primaire à l'intérieur d'un générateur de gaz, et une veine secondaire d'écoulement d'un flux secondaire autour du générateur de gaz, l'écope étant située sur une paroi annulaire entourant le générateur de gaz et définissant intérieurement la veine secondaire ;
- l'écope est située à une entrée d'un conduit d'amenée d'air jusqu'à un échangeur de chaleur, par exemple air/huile ;
- la turbomachine est dépourvue d'inverseur de poussée et comprend une soufflante dont les aubes sont à calage variable et sont aptes à adopter une première position de calage permettant l'écoulement du premier flux d'air sur la paroi, et une seconde position de calage permettant l'écoulement du second flux d'air sur la paroi.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une demi vue schématique en coupe axiale d'une turbomachine équipée d'une écope selon l'invention, cette écope étant dans une première position,
[Fig.2] la figure 2 est une demi vue schématique en coupe axiale de la turbomachine de la figure 1, l'écope étant dans une deuxième position,
[Fig.3] la figure 3 est une vue schématique en perspective d'un mode de réalisation d'une écope selon l'invention,
[Fig.4] la figure 4 est une vue schématique à plus grande échelle d'une partie d'une turbomachine équipée de l'écope de la figure 3, qui est ici dans une position intermédiaire de repos,
[Fig.5] la figure 5 est une vue similaire à celle de la figure 4 et montrant l'écope dans sa première position,
[Fig.6] la figure 6 est une vue similaire à celle de la figure 4 et montrant l'écope dans sa deuxième position,
[Fig.7] la figure 7 est une vue schématique à plus grande échelle d'une partie d'une turbomachine équipée d'une variante de réalisation d'une écope selon l'invention, qui est ici dans une première position, et
[Fig.8] la figure 8 est une vue similaire à celle de la figure 7 et montrant l'écope dans sa deuxième position.

### Description détaillée de l'invention

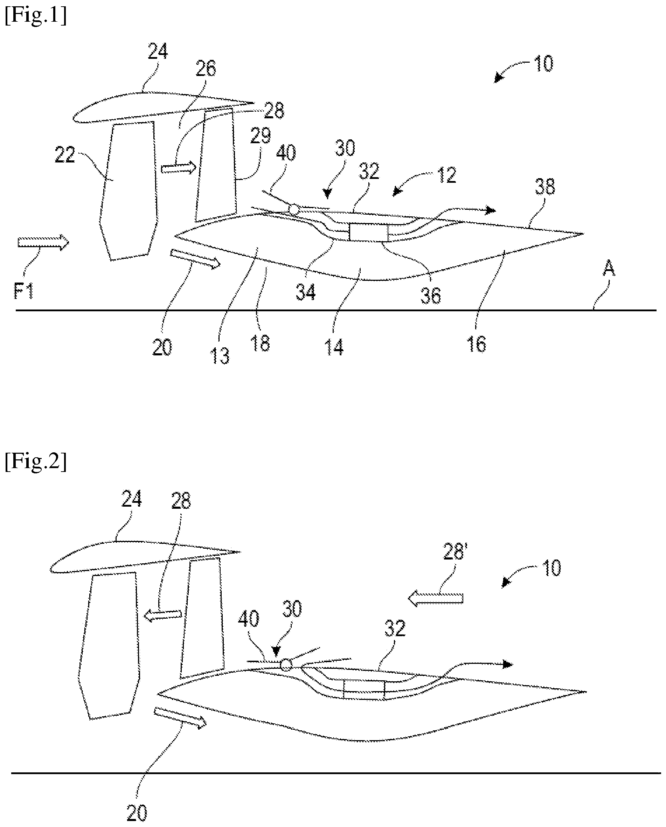

Les figures 1 et 2 représentent une turbomachine 10 d'aéronef et en particulier un turboréacteur à double flux.

La turbomachine 10 comprend un générateur de gaz 12 comportant, d'amont en aval par rapport au sens de circulation des gaz selon un fonctionnement normal illustré à la figure 1 (cf. flèches), au moins un compresseur 13, une chambre de combustion 14 et au moins une turbine 16. Le générateur de gaz 12 définit une veine annulaire 18 d'écoulement d'un flux primaire 20 qui s'écoule dans le compresseur 13 puis est mélangé à du carburant et brûlé dans la chambre de combustion 14, pour être afin détendu dans la turbine 16.

Une soufflante 22 est montée à une extrémité axiale du générateur de gaz 12, à l'amont dans l'exemple représenté et par référence à la circulation des gaz selon le fonctionnement normal de la figure 1, et comprend une hélice entraînée en rotation par le rotor du compresseur et de la turbine. Dans le cas d'un générateur de gaz 12 à double corps, respectivement à basse pression et à haute pression, la soufflante 22 serait entraînée en rotation par un arbre du corps basse pression.

La soufflante 22 et au moins une partie du générateur de gaz 12 sont entourées par une nacelle 24 qui définit autour du générateur de gaz 12 une veine annulaire 26 d'écoulement d'un flux secondaire 28. La nacelle 24 est reliée au générateur de gaz 12 par des bras structuraux 29 qui s'étendent sensiblement radialement entre le générateur de gaz et la nacelle par référence à l'axe longitudinal A de la turbomachine qui correspond à l'axe de rotation principal de son ou ses rotors et en particulier du corps basse pression précité.

Le flux d'air entrant dans la turbomachine (flèche F1) pénètre dans la nacelle 24 et traverse la soufflante 22, et se divise ensuite en deux flux annulaires et coaxiaux, le flux annulaire externe qui correspond au flux secondaire 28 précité, et le flux annulaire interne qui correspond au flux primaire 20.

Comme évoqué ci-dessus, la figure 1 représente le mode de fonctionnement normal de la turbomachine 10 dans lequel le flux secondaire 28 s'écoule de l'amont vers l'aval de la turbomachine 10 et donc de la gauche vers la droite du dessin.

La figure 2 représente un mode de fonctionnement à flux inversé dans lequel le flux secondaire 28' s'écoule de l'aval vers l'amont et donc de la droite vers la gauche du dessin.

Cette inversion du sens d'écoulement du flux secondaire 28' peut être réalisée grâce à un inverseur de poussée situé à l'aval de la nacelle 24. De manière préférée, dans le cadre de la présente invention, cette inversion est réalisée par la soufflante 22 elle-même, qui comprend des pales à calage variable aptes à adopter une position de calage dans laquelle elles inversent le sens de circulation des gaz dans la turbomachine. Cette technologie permet de ne pas équiper la turbomachine d'un inverseur de poussée et donc de simplifier la nacelle en la raccourcissant par exemple, comme dans l'exemple représenté.

La présente invention propose une écope 30 qui est apte à capter de l'air quelle que soit la direction d'écoulement de cet air parmi deux directions opposées. L'écope 30 selon l'invention peut ainsi être assimilée à une double écope.

Les figures 1 et 2 illustrent un exemple d'implantation d'une écope 30 dans la turbomachine 10. L'écope 30 est ici installée sur une paroi annulaire externe 32 du générateur de gaz 12 qui définit intérieurement la veine 26 d'écoulement du flux secondaire 28, 28'.

En variante, l'écope 30 pourrait être montée sur une paroi annulaire qui définirait extérieurement la veine 26, tel qu'une paroi de la nacelle 24 par exemple. L'écope 30 peut être montée dans n'importe quelle position axiale le long de l'axe A.

L'écope 30 est montée à une extrémité d'un conduit 34 d'acheminement d'air jusqu'à un échangeur de chaleur 36, du type air/huile par exemple. Cette extrémité forme un orifice d'entrée d'air dans le conduit.

L'extrémité du conduit 34, opposée à l'écope 30, débouche par exemple sur une tuyère 38 d'échappement des gaz de la turbomachine 10. L'échangeur 36 est ici situé sensiblement au milieu du conduit 34.

Selon l'invention, l'écope 30 comporte un corps 40 qui est mobile entre au moins deux positions dont :
- une première position illustrée à la figure 1 dans laquelle il est configuré pour capter une partie d'un premier flux d'air s'écoulant dans une première direction, tel que le flux secondaire 28, et
- une deuxième position illustrée à la figure 2 dans laquelle il est configuré pour capter une partie d'un second flux d'air s'écoulant dans une deuxième direction qui est opposée à la première direction, tel que le flux secondaire inversé 28'.

Le corps 40 est monté libre en déplacement entre ces positions précitées de façon à adopter automatiquement la première position lors de l'écoulement du premier flux d'air, et à adopter automatiquement la deuxième position lors de la l'écoulement du deuxième flux d'air.

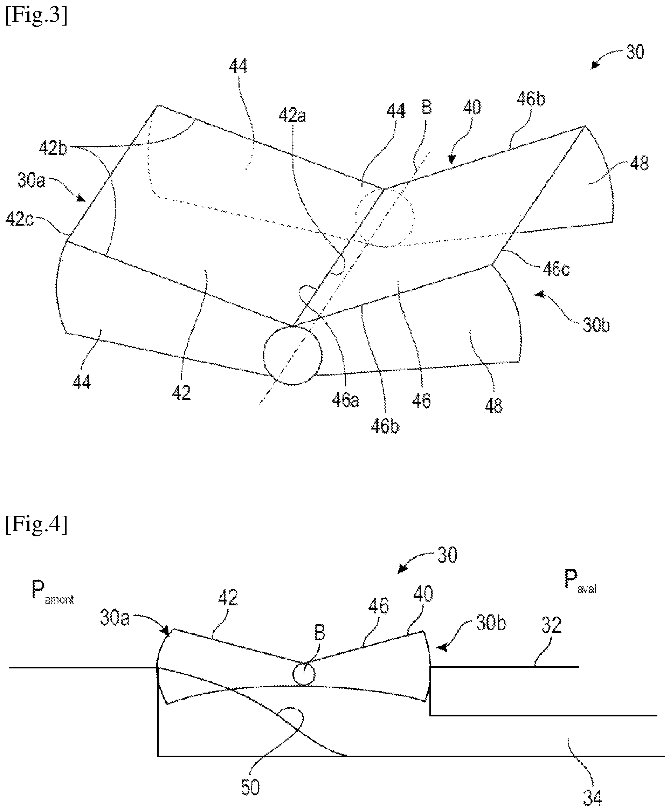

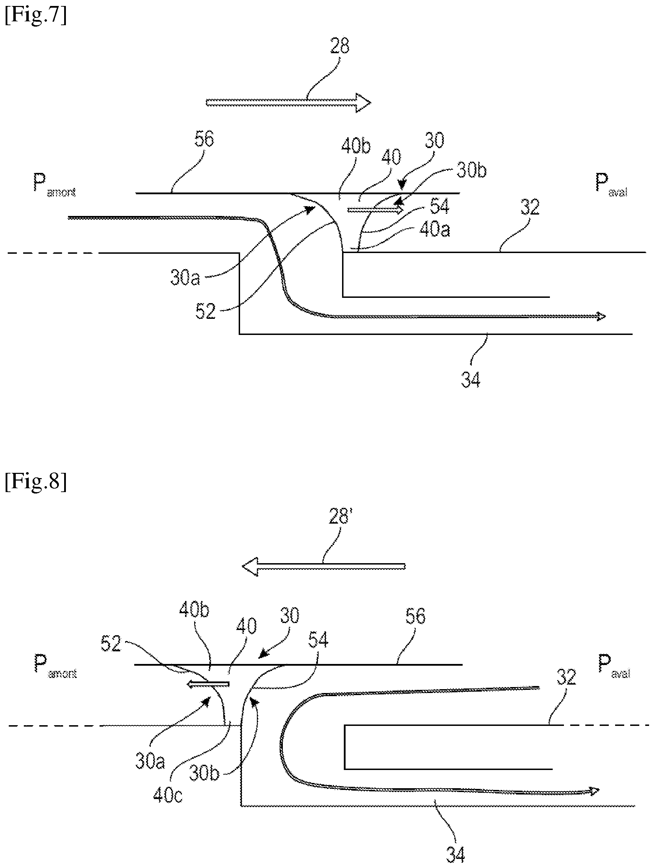

Les figures 3 à 6 illustrent un premier mode de réalisation de l'écope 30 et les figures 7 et 8 illustrent un second mode de réalisation de cette écope.

L'écope 30 de la figure 3 comprend un corps 40 qui est mobile en pivotement autour d'un axe B sensiblement perpendiculaire aux deux directions précitées.

L'écope 30 a ici une forme générale de dièdre et comprend deux bouches de captation 30a, 30b. Un premier côté du dièdre comprend une paroi 42 de forme générale rectangulaire. Un bord 42a de cette paroi 42 est situé au niveau de l'axe B et deux bords opposés 42b de cette paroi 42, qui sont sensiblement perpendiculaires à l'axe B, sont reliés à des rebords 44 qui sont parallèles et en regard l'un de l'autre. Le bord 42c de la paroi opposé au bord 42a définit une première bouche de captation 30a avec des bords adjacents des rebords 44.

Un second côté du dièdre comprend une paroi 46 de forme générale rectangulaire. Un bord 46a de cette paroi 46 est situé au niveau de l'axe B et jointif au bord 42a de la paroi 42. Deux bords opposés 46b de la paroi 46, qui sont sensiblement perpendiculaires à l'axe B, sont reliés à des rebords 48 qui sont parallèles et en regard l'un de l'autre. Le bord 46c de la paroi opposé au bord 46a définit la deuxième bouche de captation 30b avec des bords adjacents des rebords 48.

L'écope 30 de la figure 3 peut adopter de manière automatique au moins trois positions illustrées respectivement aux figures 4 à 6.

L'écope 30 est tout d'abord configurée pour adopter une position intermédiaire de repos illustrée à la figure 4, en l'absence d'écoulement autour de cette écope et sur la paroi 32. Cette position est adoptée de manière automatique par le fait que les pressions situées juste en amont et en aval de l'écope (respectivement Pamont et Pavai), c'est-à-dire au niveau des deux bouches de captation 30a, 30b, sont identiques. Dans ce cas, le corps de l'écope peut fermer, de manière hermétique ou non, l'orifice d'entrée du conduit 34.

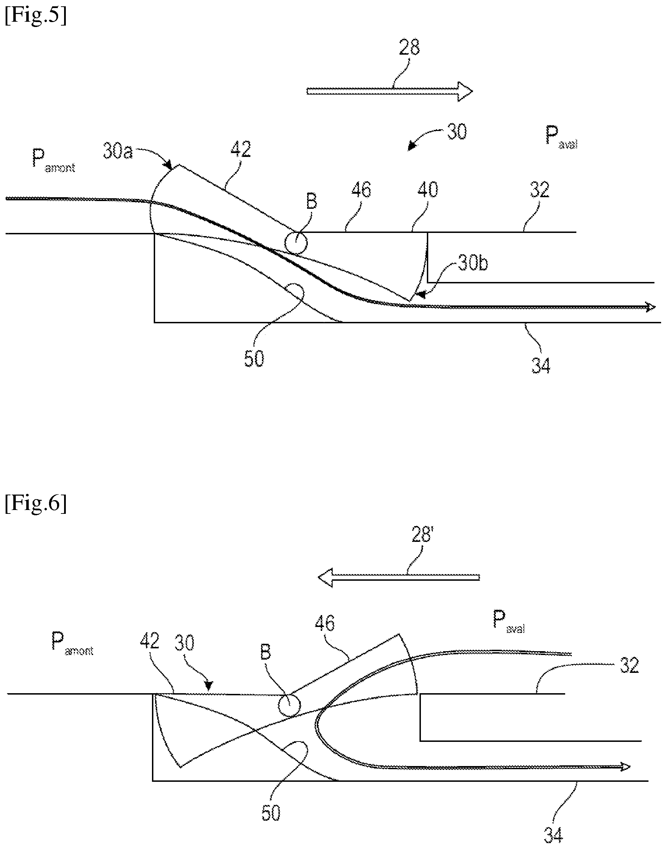

L'écope 30 est également configurée pour adopter automatiquement une position illustrée à la figure 5 lorsqu'elle est balayée par le flux secondaire 28. La pression dynamique en amont de l'écope (Pamont) est alors supérieure à la pression dynamique en aval de l'écope (Paval). La bouche de captation 30a est ouverte et la bouche de captation 30b est fermée. Une partie du flux secondaire 28 est alors captée par l'écope 30 et pénètre dans le conduit 34 qui peut comprendre au niveau de l'orifice d'entrée une surface aérodynamique 50 d'optimisation d'écoulement d'air afin d'éviter les décollements.

Dans cette position, la paroi 46 s'étend de préférence dans le prolongement de la paroi 32, comme cela est visible à la figure 5.

L'écope 30 est également configurée pour adopter automatiquement une position illustrée à la figure 6 lorsqu'elle est balayée par le flux secondaire 28'. La pression dynamique Pamont est alors inférieure à la pression dynamique Paval. La bouche de captation 30b est ouverte et la bouche de captation 30a est fermée. Une partie du flux secondaire 28' est alors captée par l'écope 30 et pénètre dans le conduit 34. Dans cette position, la paroi 42 s'étend de préférence dans le prolongement de la paroi 32, comme cela est visible à la figure 6.

Bien que cela ne soit pas représenté, l'écope 30 pourrait comprendre un dispositif à aimant ou ressort qui serait configuré pour maintenir le corps dans au moins une des trois positions précitées, et éviter ainsi toute oscillation autour de cette position en fonctionnement. Le corps serait par exemple maintenu dans la position de la figure 4 par un aimant ou un ressort, dont la force de maintien serait vaincue dès l'écoulement du flux secondaire 28 ou 28'. Le corps serait par exemple maintenu dans chacune des positions des figures 5 et 6 par un aimant ou un ressort, dont la force de maintien serait vaincue dès la disparition ou l'inversion de l'écoulement d'air.

L'écope 30 des figures 7 et 8 comprend un corps 40 qui est mobile en translation le long d'un axe parallèle à l'axe A précité.

L'écope 30 a ici en section transversale une forme générale en V et comprend deux surfaces aérodynamiques 52, 54 incurvées concaves, respectivement amont et aval, qui définissent les bouches de captation 30a, 30b de l'écope.

Le corps 40 comprend une extrémité inférieure 40a (ou intérieure vis-à-vis de l'axe A) qui est relativement mince en direction axiale et qui est apte à coulisser sur la paroi 32, et une extrémité supérieure 40b qui est plus épaisse en direction axiale et qui est apte à coulisser sur une autre paroi 56 montée sur ou autour de la paroi 32. On comprend donc que l'écope est prise en sandwich entre les parois 32 et 56.

L'écope 30 est configurée pour adopter automatiquement une position illustrée à la figure 7 lorsqu'elle est balayée par le flux secondaire 28. La pression dynamique Pamont est alors supérieure à la pression dynamique Paval. La bouche de captation 30a et en particulier la surface 52 capte et guide une partie du flux secondaire 28 vers le conduit 34.

Dans cette position, l'extrémité inférieure 40a du corps 40 de l'écope 30 est située juste en aval de l'orifice d'entrée du conduit 34 et en appui sur la paroi 32.

L'écope 30 est également configurée pour adopter automatiquement une position illustrée à la figure 8 lorsqu'elle est balayée par le flux secondaire 28'. La pression dynamique Pamont est alors inférieure à la pression dynamique Paval. La bouche de captation 30b et en particulier la surface 54 capte et guide une partie du flux secondaire 28' vers le conduit 34.

Dans cette position, l'extrémité inférieure 40a du corps 40 de l'écope 30 est située juste en amont de l'orifice d'entrée du conduit 38 (par référence à l'écoulement d'air en fonctionnement normal) et en appui sur la paroi 32.

Bien que cela ne soit pas représenté, l'écope 30 pourrait comprendre un dispositif à aimant ou ressort qui serait configuré pour maintenir le corps dans au moins une des deux positions précitées, et éviter ainsi toute oscillation autour de cette position en fonctionnement. Le corps serait par exemple maintenu dans chacune des positions des figures 5 et 6 par un aimant ou un ressort, dont la force de maintien serait vaincue dès la disparition ou l'inversion de l'écoulement d'air. Le corps pourrait également être sollicité par ce type de dispositif, en l'absence de tout écoulement, dans une position intermédiaire de fermeture de l'orifice d'entrée du conduit 34.

Bien que l'invention ait été décrite et illustrée dans le contexte d'une turbomachine carénée, équipée d'une nacelle et de bras structuraux de liaison du générateur de gaz à la nacelle, l'invention n'est pas limitée à ce type de turbomachine et s'applique par exemple également à une turbomachine à hélice non carénée.

## Revendications

1. Ecope (30) pour une turbomachine (10) d'aéronef, cette écope comportant un corps (40) qui est mobile entre au moins deux positions dont une première position dans laquelle il est configuré pour capter une partie d'un premier flux d'air (28) s'écoulant dans une première direction, et une deuxième position dans laquelle il est configuré pour capter une partie d'un second flux d'air (28') s'écoulant dans une deuxième direction qui est opposée à la première direction, **caractérisée en ce que** ledit corps est monté libre en déplacement entre lesdites au moins deux positions de façon à adopter automatiquement la première position lors de l'écoulement du premier flux d'air, et à adopter automatiquement la deuxième position lors de la l'écoulement du deuxième flux d'air.

2. Ecope (30) selon la revendication précédente, dans laquelle ledit corps (40) est mobile en pivotement ou en coulissement entre lesdites positions.

3. Ecope (30) selon la revendication précédente, dans laquelle ledit corps (40) est mobile en pivotement autour d'un axe (B) sensiblement perpendiculaire auxdites première et deuxième directions.

4. Ecope (30) selon l'une des revendications précédentes, dans laquelle ledit corps (40) est configuré pour adopter une position intermédiaire de repos, situé entre les première et deuxième positions, en l'absence d'écoulement du premier flux d'air et du deuxième flux d'air (28, 28').

5. Ecope (30) selon la revendication précédente, dans laquelle elle comprend un orifice de passage d'air capté par le corps (40), ledit corps étant configuré pour fermer cet orifice lorsqu'il est dans la position intermédiaire et pour l'ouvrir lorsqu'il est dans chacune des première et deuxième positions.

6. Ecope (30) selon l'une des revendications précédentes, dans laquelle ledit corps (40) comprend une première bouche (30a) ou surface aérodynamique (52) de captation orientée vers la deuxième direction, et une seconde bouche (30b) ou surface aérodynamique (54) de captation orientée vers la première direction.

7. Ecope (30) selon la revendication précédente, dans laquelle les première et seconde surfaces aérodynamiques (52, 54) sont planes ou incurvées concaves.

8. Ecope (30) selon l'une des revendications précédentes, dans laquelle ledit corps (40) a une forme générale de dièdre ou en section transversale une forme générale en V.

9. Turbomachine (10), en particulier d'aéronef, comportant au moins une écope (30) selon l'une des revendications précédentes.

10. Turbomachine (10) selon la revendication précédente, dans laquelle elle est du type à double flux et comprend une veine primaire (18) d'écoulement d'un flux primaire (20) à l'intérieur d'un générateur de gaz (12), et une veine secondaire (26) d'écoulement d'un flux secondaire (28) autour du générateur de gaz, l'écope étant située sur une paroi annulaire (32) entourant le générateur de gaz et définissant intérieurement la veine secondaire.

11. Turbomachine (10) selon la revendication précédente, dans laquelle l'écope (30) est située à une entrée d'un conduit (34) d'amenée d'air jusqu'à un échangeur de chaleur (36), par exemple air/huile.

12. Turbomachine (10) selon la revendication précédente, dans laquelle elle est dépourvue d'inverseur de poussée et comprend une soufflante (22) dont les aubes sont à calage variable et sont aptes à adopter une première position de calage permettant l'écoulement du premier flux d'air sur la paroi, et une seconde position de calage permettant l'écoulement du second flux d'air sur la paroi.

## Patentansprüche

1. Schöpfkelle (30) für ein Turbotriebwerk (10) eines Luftfahrzeugs, wobei diese Schöpfkelle einen Körper (40) umfasst, der zwischen mindestens zwei Positionen beweglich ist, davon eine erste Position, in der er konfiguriert ist, um einen Teil eines ersten Luftstroms (28) aufzunehmen, der in einer ersten Richtung fließt,
und eine zweite Position, in der er konfiguriert ist, um einen Teil eines zweiten Luftstroms (28') aufzunehmen, der in einer zweiten Richtung fließt, die der ersten Richtung entgegengesetzt ist, **dadurch gekennzeichnet, dass** der Körper derart frei verschiebbar zwischen den mindestens zwei Positionen montiert ist, um bei dem Fluss des ersten Luftstroms automatisch die erste Position anzunehmen, und bei dem Fluss des zweiten Luftstroms automatisch die zweite Position anzunehmen.

2. Schöpfkelle (30) nach dem vorstehenden Anspruch, wobei der Körper (40) zwischen den Positionen schwenk- oder gleitbeweglich ist.

3. Schöpfkelle (30) nach dem vorstehenden Anspruch, wobei der Körper (40) um eine Achse (B) herum, im Wesentlichen senkrecht zu der ersten und zweiten Richtung, schwenkbeweglich ist.

4. Schöpfkelle (30) nach einem der vorstehenden Ansprüche, wobei der Körper (40) konfiguriert ist, um bei Abwesenheit des Flusses des ersten Luftstroms und des zweiten Luftstroms (28, 28') eine zwischenliegende Ruheposition anzunehmen, die zwischen der ersten und zweiten Position liegt.

5. Schöpfkelle (30) nach dem vorstehenden Anspruch, wobei sie eine Durchgangsöffnung für von dem Körper (40) aufgenommene Luft umfasst, wobei der Körper konfiguriert ist, um diese Öffnung zu schließen, wenn er in der zwischenliegenden Position vorliegt, und um sie zu öffnen, wenn er jeweils in einer der ersten und zweiten Position vorliegt.

6. Schöpfkelle (30) nach einem der vorstehenden Ansprüche, wobei der Körper (40) eine erste Mündung (30a) oder aerodynamische Oberfläche (52) zur Aufnahme, die zu der zweiten Richtung hin orientiert ist, und eine zweite Mündung (30b) oder aerodynamische Oberfläche (54) zur Aufnahme umfasst, die zu der ersten Richtung orientiert hin ist.

7. Schöpfkelle (30) nach dem vorstehenden Anspruch, wobei die erste und zweite aerodynamische Oberfläche (52, 54) eben oder konkav gekrümmt sind.

8. Schöpfkelle (30) nach einem der vorstehenden Ansprüche, wobei der Körper (40) eine allgemeine Diederform oder im Querschnitt eine allgemeine V-Form aufweist.

9. Turbotriebwerk (10), insbesondere eines Luftfahrzeugs, das mindestens ein Schöpfkelle (30) nach einem der vorstehenden Ansprüche umfasst.

10. Turbotriebwerk (10) nach dem vorstehenden Anspruch, wobei es von vom Doppeltstromtyp ist und eine primäre Vene (18) zum Fluss eines primären Stroms (20) im Inneren eines Gasgenerators (12) und eine sekundäre Vene (26) zum Fluss eines sekundären Stroms (28) um den Gasgenerator herum umfasst, wobei die Schöpfkelle auf einer ringförmigen Wand (32) liegt, die den Gasgenerator umgibt und innen die sekundäre Vene definiert.

11. Turbotriebwerk (10) nach dem vorstehenden Anspruch, wobei die Schöpfkelle (30) an einem Eingang einer Leitung (34) zum Zuführen von Luft bis zu einem Wärmetauscher (36), zum Beispiel Luft/Öl, liegt.

12. Turbotriebwerk (10) nach dem vorstehenden Anspruch, wobei ihm eine Schubumkehr fehlt und es ein Gebläse (22) umfasst, von dem die Schaufelblätter mit variabler Feststellposition vorliegen und in der Lage sind, eine erste Feststellposition, die den Fluss des ersten Luftstroms auf die Wand erlaubt, und eine zweite Feststellposition anzunehmen, die den Fluss des zweiten Luftstroms auf die Wand erlaubt.

## Claims

1. A scoop (30) for an aircraft turbine engine (10), this scoop comprising a body (40) which is movable between at least two positions, including a first position in which it is configured to capture a part of a first air stream (28) flowing in a first direction, and a second position in which it is configured to capture a part of a second air stream (28') flowing in a second direction which is opposite to the first direction, **characterized in that** said body is mounted to move freely between said at least two positions so as to automatically adopt the first position when the first air stream flows, and to automatically adopt the second position when the second air stream flows.

2. The scoop (30) according to the preceding claim, wherein said body (40) is pivotally or slidably movable between said positions.

3. The scoop (30) according to the preceding claim, wherein said body (40) is pivotally movable about an axis (B) substantially perpendicular to said first and second directions.

4. The scoop (30) according to any of the preceding claims, wherein said body (40) is configured to adopt an intermediate rest position, located between the first and second positions, in the absence of flow of the first air stream and of the second air stream (28, 28').

5. The scoop (30) according to the preceding claim, wherein it comprises an orifice for the passage of air captured by the body (40), said body being configured to close this orifice when it is in the intermediate position and to open it when it is in each of the first and second positions.

6. The scoop (30) according to any of the preceding claims, wherein said body (40) comprises a first aerodynamic capture mouth (30a) or surface (52) oriented towards the second direction, and a second aerodynamic capture mouth (30b) or surface (54) oriented towards the first direction.

7. The scoop (30) according to the preceding claim, wherein the first and second aerodynamic surfaces (52, 54) are planar or concave curved.

8. The scoop (30) according to any of the preceding claims, wherein said body (40) has a general dihedral shape or a general V-shape in cross-section.

9. A turbine engine (10), in particular for an aircraft, comprising at least one scoop (30) according to one of the preceding claims.

10. The turbine engine (10) according to the preceding claim, wherein it is of the dual-flow type and comprises a primary flow duct (18) of a primary stream (20) flowing within a gas generator (12), and a secondary flow duct (26) of a secondary stream (28) flowing around the gas generator, the scoop being located on an annular wall (32) surrounding the gas generator and internally defining the secondary duct.

11. The turbine engine (10) according to the preceding claim, wherein the scoop (30) is located at an inlet of a conduit (34) for supplying air to a heat exchanger (36), for example air/oil.

12. The turbine engine (10) according to the preceding claim, wherein it has no thrust reverser and comprises a fan (22) whose vanes are of variable pitch and are capable of adopting a first pitch position allowing the first air stream to flow over the wall, and a second pitch position allowing the second air stream to flow over the wall.
